# EUROPÄISCHE PATENTSCHRIFT

(11) **EP 3 650 167 B1**
(45) Veröffentlichungstag und Bekanntmachung des Hinweises auf die Patenterteilung: **05.07.2023**
(21) Anmeldenummer: 18204968.4
(22) Anmeldetag: 07.11.2018
(51) Int. Cl.: B23Q 3/06

(54) **AUFSPANNVORRICHTUNG ZUM FIXIEREN VON WERKSTÜCKEN BEI EINER BEARBEITUNG**
CLAMPING DEVICE FOR FIXING WORKPIECES DURING PROCESSING
DISPOSITIF DE FIXATION PERMETTANT DE FIXER DES PIÈCES LORS D'UN USINAGE

(43) Veröffentlichungstag der Anmeldung: 13.05.2020
(73) Patentinhaber: On.GmbH, 88525 Heudorf (DE)
(72) Erfinder: Brobeil, Volker, 88525 Dirmentingen (DE)
(74) Vertreter: Baur & Weber Patentanwälte PartG mbB

(56) Entgegenhaltungen:
- DE-A1- 19 504 916
- DE-A1-102013 111 127
- DE-B3-102011 078 875

## Beschreibung

Die Erfindung betrifft eine Aufspannvorrichtung zum Fixieren von Werkstücken bei einer Bearbeitung.

Aufspannvorrichtungen wie beispielsweise Aufspannwinkel sind Werkzeuge, die meist auf Werkbänken oder auf Maschinentischen eingesetzt werden, um zu bearbeitende Werkstücke in einer vorgegebenen Position zu fixieren. Üblicherweise wird bei der Bearbeitung eine lotrechte Position des Werkstücks gewünscht, sodass Aufspannvorrichtungen häufig als rechte Winkel mit zwei Schenkeln oder als Würfel ausgeführt werden.

Zur Fixierung von Werkstücken, beispielsweise mittels Spannklemmen, umfassen Aufspannwinkel T-Nuten, an denen ein Werkstück verschraubt werden kann.

Aufspannwinkel als Werkstückhalter insbesondere bei der Bearbeitung mit Bohr- und Fräsmaschinen einzusetzen, ist bereits seit langer Zeit bekannt. So zeigt die DE 643 782 einen Aufspannwinkel für Werkzeugmaschinen mit einer Grundplatte, in derer gewölbter Auflagefläche eine Aufspannplatte drehbar gelagert ist, wobei in der Aufspannplatte eine T-Nut ausgebildet ist, an der Werkstücke zur Bearbeitung fixiert werden können.

Aus der CN 205765746 U ist ein Aufspannwinkel bekannt, der zwei an einer Winkelschiene befestigte Trägerplatten umfasst, wobei in den Trägerplatten Bohrungen vorgesehen sind, an denen ein Werkstück zur Bearbeitung festgeschraubt werden kann.

Aus der DE 20 2013 008 519 U1 ist ein Spannsystem zum Spannen von Bauteilen auf Werkzeugmaschinen bekannt, bei dem an einem Auflageelement zwei gegenüberliegend angeordnete T-Nuten vorgesehen sind, an denen einerseits das Spannsystem selbst aber auch ein Werkstück zu Bearbeitung befestigt werden kann.

Aus der DE 1 759 268 U ist eine starrer Aufspannwinkel bekannt, der auf einer Seitenfläche T-Nuten umfasst, an denen ein Werkstück zur lotrechten Ausrichtung während der Bearbeitung befestigt werden kann.

Aus der US 4,828,240 ist eine würfelförmige Haltevorrichtung für Werkstücke während der Bearbeitung bekannt, auf deren Außenflächen Lochplatten anordenbar sind, an denen Werkstücke zur Bearbeitung befestigt werden können. Alternativ können die Lochplatten T-Nuten umfassen an denen die Werkstücke zur Bearbeitung befestigt werden können.

Aus der DE 10 2013 111 127 A1, die die Basis für den Oberbegriff des Anspruchs 1 bildet, ist eine Aufspannplatte bekannt, die aus einem selbstverdichtenden Beton gebildet ist, in den als Schienen oder als Bolzen ausgebildete Spanneinrichtungen bezüglich der Oberfläche der Aufspannplatte nach innen versetzt angeordnet sind, wobei Bauteile während der Bearbeitung an den Spanneinrichtungen fixiert werden können.

Die DE 10 2011 078 875 B3 betrifft eine Vorrichtung zum Spannen und Halten von Werkstücken mittels Unterdruck, mit wenigstens einem Spannbalken und wenigstens einem auf eine Auflagefläche des Spannbalkens aufsetzbaren Blocksauger, auf welchem das zu spannende Werkstück auflegbar ist, wobei der Spannbalken mit Absperrventilen versehen ist, über welche Luft absaugbar ist und dadurch der Blocksauger und/oder das Werkstück gespannt wird bzw. werden, und der Blocksauger auf seiner auf der Auflagefläche aufliegenden Unterseite eine wenigstens ein Absperrventil umgrenzende Dichtung aufweist, durch welche ein abgeschlossener Raum gebildet wird, welcher über das Absperrventil evakuierbar ist, wobei die Oberseite des Blocksaugers von einer das Werkstück tragenden Saugplatte gebildet wird, wobei der Spannbalken und/oder der Blocksauger zumindest teilweise aus Beton bestehen.

Die DE 195 04 916 A1 betrifft eine Aufsatz-Spannvorrichtung mit einem gegossenen Vorrichtungsgrundkörper aus einem reaktionsharzgebundenen Material und darin als Einlegeteile angeordnete metallische Elemente für Werkzeugmaschinen und Bearbeitungszentren zur Bearbeitung von schwer spannbaren Werkstücken. In einem turmartigen Vorrichtungsgrundkörper sind gegenüberliegend, durch ein inneres Gerüst verbunden, feste und/oder verstellbare metallische Aufnahmeelemente in mehreren Ebenen waagerecht oder senkrecht angeordnet.

Gemeinsam ist den bekannten Aufspannvorrichtungen, dass diese entweder aus einem Eisenguss gefertigt werden oder aber aus einzelnen Stahlplatten zusammengesetzt werden. Diese Materialwahl oder Herstellung bieten zwar eine gute Bauteilfestigkeit der Aufspannvorrichtungen, jedoch sind der Metallguss und die Verwendung der Stahlplatten mit hohen Kosten verbunden. Als weiterer Nachteil des Metallgusses oder der Verwendung von Platten hat sich die Übertragung von Vibrationen des Bearbeitungsgerätes auf die Einspannvorrichtung erwiesen, weil dadurch der Bearbeitungspräzision Grenzen gesetzt werden.

Es ist daher Aufgabe der Erfindung, eine Aufspannvorrichtung anzugeben, die Kostengünstig herstellbar ist und durch derer Materialwahl die Übertragung von Vibrationen auf das zu bearbeitenden Werkstück minimiert wird.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird eine Aufspannvorrichtung zum Fixieren von Werkstücken während der Bearbeitung angegeben, die eine Befestigungsvorrichtung, in die Haltemittel zum Anordnen der Aufspannvorrichtung auf einer Arbeitsfläche eingreifen können, und einen Grundkörper umfasst, wobei der Grundkörper auf einer Seitenfläche wenigstens eine Vertiefung aufweist, die entlang einer Längsrichtung zwischen gegenüberliegenden Stirnseiten der Seitenfläche ausgebildet ist und in der zwei gegenüberliegende Seitenwände und ein Boden einen Aufnahmeraum umgeben, wobei der Aufnahmeraum durch zwei zueinander parallel verlaufende und quer zur Längsrichtung über den Aufnahmeraum ragende Vorsprünge einer Haltevorrichtung derart verschließbar ist, dass die Vorsprünge einen entlang der Längsrichtung verlaufenden Freiraum bilden, sodass der Freiraum und der Aufnahmeraum eine T-Nut ausbilden, in der ein Werkstück fixiert werden kann, wobei der Grundkörper aus Beton gefertigt ist. Die Haltevorrichtung ist als Trägerplatte ausgebildet, in der der Freiraum als in Längsrichtung verlaufender Durchbruch ausgespart ist, wobei die Vorsprünge längs des Durchbruches ausgebildet sind und der Durchbruch die Vorsprünge voneinander beabstandet, wobei die Trägerplatte derart auf der Seitenfläche angeordnet ist, dass der Freiraum in Längsrichtung über der Vertiefung verläuft, wobei der Freiraum quer zur Längsrichtung schmaler als die Vertiefung quer zur Längsrichtung ist.

Gegenüber den bekannten Aufspannvorrichtungen wird demnach vorgeschlagen, die Aufspannvorrichtung zumindest teilweise aus Beton zu fertigen, wobei insbesondere der Grundkörper aus Beton gefertigt wird. Die Haltevorrichtung wird vorteilhafter Weise aus Stahl oder einem Material mit ähnlichen Werkstoffeigenschaften wie Stahl gefertigt. Überraschenderweise hat sich herausgestellt, dass Beton Vibrationen, wie sie durch Bearbeitungsmaschinen hervorgerufen werden, besonders gut absorbiert, sodass die Vibrationen nicht oder nur in sehr geringem Maße an das zu bearbeitende Werkstück weitergeleitet werden. Darüber hinaus ist Beton verhältnismäßig günstig und einfach zu verarbeiten, sodass die Produktionskosten von Aufspannvorrichtung reduziert werden. Ebenso hat sich herausgestellt, dass volumengleiche Aufspannvorrichtungen aus Beton eine geringere Masse aufweisen als Aufspannvorrichtungen aus Metall, sodass mit der Erfindung auch Aufspannvorrichtungen mit geringerem Gewicht geschaffen werden können

Mittels der Befestigungsvorrichtung wird die Aufspannvorrichtung auf einem Maschinentisch, einer Werkbank oder allgemein formuliert in einem Bearbeitungsbereich einer Maschine verrutschsicher angeordnet. Diese Anordnung erfolgt üblicherweise durch Verschrauben oder durch Sichern mittels Spanneisen.

Der Grundköper aus Beton umfasst auf mindestens einer seiner Seitenflächen Vertiefungen, die rillenartig über die Seitenfläche verlaufen. Die Vertiefungen müssen dabei nicht über die gesamte Seitenfläche laufen, jedoch zur Bildung einer T-Nut mindestens an einer Stirnseite einer Seitenfläche angrenzen. Vorteilhafterweise werden mehrere voneinander beanstandete Vertiefungen auf einer Seitenfläche geschaffen, sodass ein Werkstück beliebig fixiert werden kann. In der Vertiefung umgeben zwei Seitenwände und ein Boden einen Aufnahmeraum. Wie noch im Zusammenhang mit Ausführungsformen der Erfindung angegeben wird, können die Seitenwände integraler Bestandteil der Vertiefung sein, also aus Beton bestehen, oder aber Bestandteile einer Profilschiene sein, die in der Vertiefung angeordnet werden kann. Der Aufnahmeraum bildet einen ersten Teil einer T-Nut.

Eine Haltevorrichtung, die Vorsprünge umfasst, verschließt den Aufnahmeraum teilweise, wobei mit der Bezeichnung "teilweise" gemeint ist, dass der Aufnahmeraum auf der dem Boden gegenüberliegenden Seite derart verschlossen wird, dass ein Freiraum zwischen den Vorsprüngen erhalten bleibt. Der Freiraum weist einen bezüglich einer Richtung quer zur Längsrichtung, in der die Vertiefung verläuft, geringeren Durchmesser auf als der Aufnahmeraum. Der Freiraum bildet einen zweiten Teil einer T-Nut. Der Freiraum und der Aufnahmeraum bilden gemeinsam eine T-Nut. Der lichte Querschnitt des Aufnahmeraumes ist dabei größer als der lichte Querschnitt des Freiraumes, sodass die beiden lichten Querschnitte zusammengesetzt die Form eines T bilden. Die Haltevorrichtung wird typischerweise aus einem Metall, insbesondere Stahl, gefertigt weil an diesen Bereich der T-Nut besondere Ansprüche hinsichtlich der Fertigungspräzision gestellt werden. Die anderen Bereiche der Aufspannvorrichtung, außer der T-Nut, erfordern keine so hohe Fertigungsgenauigkeit, sodass diese Bereiche aus Beton gefertigt werden können.

Demnach kann der Grundkörper aus Beton mit einer etwas größeren Maßtoleranz gefertigt werden, weil die Teile der Aufspannvorrichtung, bei denen ein genaues Endmaß von Bedeutung ist, als separate Bauteile bereitgestellt werden.

Die Vorsprünge verlaufen zueinander parallel in Längsrichtung, wobei die Vorsprünge typischer Weise symmetrisch über den Aufnahmeraum ragen. Alternativ könnte aber auch einer der beiden Vorsprünge weiter über den Aufnahmeraum ragen als der andere, sodass im Grenzfall, wenn ein Vorsprung auf Höhe der Seitenwand endet, von einer L-Nut gesprochen werden könnte.

Zum Fixieren eines Werkstücks an der Aufspannvorrichtung wird ein T-förmiges Haltemittel in die T-Nut von der Stirnseite einer Seitenfläche her eingebracht und von der Werkstückseite der T-Nut ausgehend in der T-Nut verspannt. Beim Fixieren eines Werkstückes stützt sich das Haltemittel vom Aufnahmeraum her gegen die Vorsprünge.

Idealerweise steht die Haltevorrichtung, mittels der die T-Nut gebildet wird, etwas über die Seitenfläche des Grundkörpers über, sodass im Falle mehrerer T-Nuten eine durch die Haltevorrichtungen gebildete, aus der Seitenfläche herausragende Ebene entsteht. Ebenfalls ist es möglich fertigungsbedingte Variationen in den Vertiefungen, die zu einem unterschiedlichen Herausstehen der Haltevorrichtung aus den Seitenflächen führen würden, durch eine gemeinsame Materialabtragung an allen Haltevorrichtungen bis zu einem gewünschten Maß zu erreichen, wobei insbesondere eine gemeinsame Anlagefläche für Werkstücke geschaffen werden kann. Alternativ ist es aber auch möglich, die zur Werkstücksseite weisende Fläche der T-Nuten, also die Oberseite der Haltevorrichtungen beziehungsweise der Vorsprünge, geringfügig in den Beton versetzt auszuführen. In diesem Fall würde die Seitenfläche des Grundkörpers als Anlagefläche für ein zu bearbeitendes Werkstück dienen. Im Falle von vertieften Haltevorrichtungen kann der Körper auf der Seitenfläche, auf der die Haltevorrichtungen angeordnet sind, durch Abtragung von Material ebenfalls von fertigungsbedingten Unebenheiten oder Graten befreit werden, sodass eine plane Anlagefläche für Werkstücke entsteht.

Gemäß einer Ausführungsform der Erfindung grenzt der Aufnahmeraum entlang der Seitenwände und des Bodens an den Grundkörper.

Demnach sind die Seitenwände und der Boden integrale Bestandteile der Vertiefung, sodass der Grundkörper, in dem die Vertiefung geschaffen ist, direkt in den Aufnahmeraum übergeht. Die Seitenwände und der Boden sind folglich aus Beton gefertigt. Diese Ausführungsform bietet sich insbesondere in Verbindung mit einer im Nachfolgenden noch näher angegebenen Trägerplatte an.

Wie bereits erwähnt, ist die Haltevorrichtung als Trägerplatte ausgebildet, in der der Freiraum als in Längsrichtung verlaufender Durchbruch ausgespart ist, wobei die Vorsprünge längs des Durchbruches ausgebildet sind und der Durchbruch die Vorsprünge voneinander beabstandet, wobei die Trägerplatte derart auf der Seitenfläche anordenbar ist, dass der Freiraum in Längsrichtung über der Vertiefung verläuft, wobei der Freiraum quer zur Längsrichtung schmaler als die Vertiefung quer zur Längsrichtung ist.

Demnach wird auf der Seitenfläche des Grundkörpers eine Trägerplatte angeordnet, die die Vertiefung derart überdeckt, dass der Aufnahmeraum teilweise verschlossen wird. Der Aufnahmeraum bildet in diesem Fall einen ersten Teil einer T-Nut, wohingegen der Freiraum in der Trägerplatte, also der Durchbruch, der über der Vertiefung angeordnet ist, den zweiten Teil der T-Nut bildet.

Die Trägerplatte kann auf der Seitenfläche des Grundkörpers aufgeklebt oder aufgeschraubt werden. Falls auf dem Grundkörper mehrere Seitenflächen mit T-Nuten vorgesehen sind, werden die Trägerplatten einzelner Seitenflächen vorteilhafterweise an den Stoßseiten etwas beanstandet angeordnet. Durch diesen Abstand können Vibrationen lediglich durch den stark dämpfenden Grundkörper nicht aber durch die Trägerplatten selbst auf weitere Trägerplatten übertragen werden. Anstelle einer einzelnen Trägerplatte, die auf einer Seitenfläche angeordnet wird, können auch mehrere Trägerplatten derart auf einer Seitenfläche angeordnet werden, dass diese mittig über den Vertiefungen beanstandet angeordnet werden. Dieser Freiraum zwischen zwei beanstandet angeordneten Trägerplatten würde dann gemeinsam mit dem Aufnahmeraum die T-Nut bilden.

Gemäß einer weiteren Ausführungsform der Erfindung grenzt der Aufnahmeraum entlang der Seitenwände und des Bodens an eine Profilschiene, die die Seitenwände und den Boden umfasst und formschlüssig in die Vertiefung eingebracht werden kann.

Die Profilschiene umfasst demnach zwei Seitenwände und einen Boden, wobei die Profilschiene formschlüssig in die Vertiefung eingebracht werden kann. Die Seitenwände und der Boden der Profilschiene umgeben den Aufnahmeraum, sodass der Aufnahmeraum durch die Seitenwände und den Boden vom Grundkörper getrennt ist.

Demnach wird eine Profilschiene in der Vertiefung angeordnet, sodass der Aufnahmeraum zumindest teilweise mit der Profilschiene gefüllt ist. Die Profilschiene wird üblicherweise aus Stahl oder einem ähnlich festen Werkstoff gefertigt. Demnach sind die Seitenwände und der Boden daher ebenfalls z.B. aus Stahl gefertigt.

Die Profilschiene kann entweder in einem Strangpressverfahren hergestellt werden oder aber aus drei Bauteilen gefertigt werden, von denen zwei Seitenwände mit Haltevorrichtungen bilden und das dritte Teil die beiden Seitenwände stegartig verbindet. Entlang des stegarteigen dritten Teils können Öffnungen vorgesehen sein mittels derer die Profilschiene beim Gießen eines Betonformteils in einer Schalform gehalten wird.

Die Profilschiene kann so ausgebildet sein, dass sie fertigungsbedingte Unebenheiten der Vertiefung ausgleicht. Insbesondere Ausschalschrägen der Vertiefung können mit der Profilschiene ausgeglichen werden.

Gemäß einer weiteren Ausführungsführungsform der Erfindung umfasst die Profilschiene die Haltevorrichtung, wobei die Vorsprünge auf den Seitenwänden der Profilschiene ausgebildet sind.

In beziehungsweise an der Profilschiene sind Haltevorrichtungen ausgebildet, die den Aufnahmeraum in der Profilschiene teilweise verschließen. Die Seitenwände der Profilschiene können so hoch ausgebildet sein, dass die Haltevorrichtung über die Seitenfläche des Grundkörpers hinausragt, oder aber so hoch sein, dass die Haltevorrichtung leicht in den Grundkörper hineinversetzt ist.

Die Haltevorrichtungen können, falls diese etwas über die Seitenfläche des Grundkörpers herausstehen, soweit abgetragen werden, dass im Falle mehrer T-Nuten alle Haltevorrichtungen auf einer gemeinsamen Ebene liegen. Der Aufnahmeraum in der Profilschiene weist üblicherweise einen rechteckigen Querschnitt auf. Alternativ kann der Querschnitt des Innenraums aber auch trapezförmig ausgebildet sein, wobei die kürzere Trapezgrundseite typischerweise in Richtung der Haltevorrichtung weist. Im Falle eines ebenfalls trapezförmigen Spannkörpers, mit dem ein Werkstück auf der Aufspannvorrichtung fixiert wird, wird durch einen trapezförmigen Querschnitt des Innenraumes sichergestellt, dass der Haltekörper entlang der T-Nut zentriert wird.

Gemäß einer weiteren Ausführungsform der Erfindung ist die Profilschiene in der Vertiefung einbetoniert.

Demnach wird die Profilschiene bereits bei der Herstellung des Grundkörpers in diesen eingesetzt, sodass die Profilschiene einerseits die Schalform für die Vertiefung bildet, aber andererseits auch gleich in dieser einbetoniert ist. Demnach ist es beispielsweise bei Betonformteilen möglich, die Profilschiene in der Schaltafel so anzuordnen, dass die Profilschiene an der Seitenfläche des Grundkörpers in der Vertiefung angeordnet ist. Um unterschiedliche Höhenlagen der Haltevorrichtungen zu den Seitenflächen des Grundkörpers zu ermöglichen, können die Profilschienen während des Betonierens auf Stufen oder in Senken der Schaltafel angeordnet werden. Im Falle von Stufen wäre die Haltevorrichtung gegenüber der Seitenfläche etwas in den Grundkörper hineinversetzt, im Falle von Senken würde die Haltevorrichtung etwas über die Seitenfläche des Grundkörpers hinausragen.

Gemäß einer weiteren Ausführungsform der Erfindung umfasst die Profilschiene auf ihrer dem Aufnahmeraum abgewandten Seite Kerben.

Durch eine Kerbe, die bezüglich der Profilschiene eine Hinterschneidung darstellt, ist es möglich, die Profilschiene stärker und haltesicherer in den Grundkörper einzubetonieren. Werkstücke, die in der Aufspannvorrichtung fixiert werden, üben auf die Profilschiene unter anderem eine Zugkraft in Richtung der Flächennormalen der Seitenfläche aus. Durch die Anordnung einer oder mehrerer Kerben im einbetonierten Teil der Profilschiene, wird die Profilschiene diesen Kräften stärker entgegenwirkend im Grundkörper gesichert.

Die Kerben können mit einbetoniert werden und erhöhen dadurch die Haltekraft der Profilschiene in der Vertiefung des Grundkörpers. Die Kerben verlaufen vorteilhafter Weise über die gesamte Längsrichtung der Profilschiene, können aber auch nur abschnittsweise gebildet sein.

Gemäß einer weiteren Ausführungsform der Erfindung ist die Profilschiene in der Vertiefung eingeklebt.

Alternativ zum Einbetonieren während der Herstellung des Grundkörpers kann die Profilschiene folglich mittels eines Klebstoffes in der Vertiefung festgeklebt werden. Als Kleber eignet sich beispielsweise Epoxidharz. Auch im Falle des Festklebens können Kerben an der Profilschiene angeordnet sein, um die Kontaktfläche zwischen Grundkörper und Profilschiene und somit die adhäsiv wirksame Fläche zu vergrößern.

Vorteilhafterweise weist die Profilschiene eine Form auf, die der Vertiefung entspricht, sodass die Profilschiene formschlüssig in der Vertiefung aufgenommen werden kann. Als Klebstoff zum Einkleben der Profilschiene eignet sich unter anderem Epoxidharz. Um die die Haftung bewirkende Kontaktfläche zwischen Profilschiene und Betonformteil zu vergrößern, kann die Vertiefung eine Stufe aufweisen, die in einer Einbuchtung der Profilschiene aufgenommen wird.

Alternativ zum Einbetonieren oder Einkleben der Profilschiene in die Vertiefung kann diese auch in der Vertiefung eingeschraubt werden.

Gemäß einer weiteren Ausführungsform der Erfindung umfasst der Grundkörper mindestens ein Betonformteil.

Demnach wird der Grundkörper aus einem oder mehreren Betonformteilen zusammengesetzt. Derartige Betonformteile können in Gussformen hergestellt werden. Die Gussformen können dabei bereits die Negativformen für die späteren Vertiefungen aufweisen, sodass diese bereits beim Guss des Betons hergestellt werden.

Die Betonformteile können zum einfachen Zusammensetzen des Grundkörpers Nuten und Federn oder Anlageflansche umfassen, entlang derer die einzelnen Betonformteile zusammengesetzt werden können. Das Zusammensetzten der Betonformteile zu einem Grundkörper kann beispielsweise mittels Verschrauben, Verkleben oder aber durch Einbringen einer dünnen Betonschicht zwischen die Betonformteile erfolgen.

Besonders hinsichtlich der Absorption von Vibrationen erweist sich die Verwendung einzelner Betonformteile als besonders vorteilhaft. So hat es sich herausgestellt, dass einzelne Betonformteile, die freitragend miteinander verbunden werden, Vibrationen noch stärker dämpfen als durchgehende Betonteile.

Gemäß einer weiteren Ausführungsform der Erfindung ist der Grundkörper quaderförmig.

Ein quaderförmiger Grundkörper kann entweder aus einem einzigen Betonguss oder aus mehreren Betonformteilen zusammengesetzt sein. Ein quaderförmiger Grundkörper mit vier Seitenflächen, einer Deckfläche und einer Standfläche könnte beispielsweise auf den vier Seitenflächen und der Deckfläche mit T-Nuten versehen seien. Vorteilhafterweise sind die T-Nuten auf unterschiedlichen Seitenflächen und/oder der Deckfläche mit verschiedenartigen T-Nuten versehen. Insbesondere hinsichtlich des Abstandes einzelner T-Nuten untereinander, der Breite der T-Nuten oder der Materialstärke der Haltevorrichtung der T-Nuten können sich diese unterscheiden.

Die Verwendung von fünf Betonformteilen, wovon vier die Seitenflächen bilden und eines eine Deckfläche bildet, hat zudem den Vorteil, dass sich diese Betonformteile aus einer Schalform bequem herauslösen lassen. Idealerweise ist die Befestigungsvorrichtung im Falle einer Quaderform auf der Bodenfläche des Quaders angeordnet, sodass der quaderförmige Grundkörper sicher auf einem Maschinentisch oder allgemein im Bearbeitungsbereich einer Maschine angeordnet und fixiert werden kann.

Gemäß einer weiteren Ausführungsform der Erfindung ist die Befestigungsvorrichtung integral in einer Seitenfläche des Grundkörpers angeordnet.

Demnach wird die Befestigungsvorrichtung auf mindestens einer Seitenfläche des Grundkörpers in den Beton integriert. Eine solche Integration erfolgt durch Eingießen der Befestigungsvorrichtung in den Beton. Angriffsflächen für Spanneisen können beispielweise als stirnseitige Aussparungen ausgeführt werden, die beispielsweise auf zwei gegenüberliegenden Seitenflächen des Grundkörpers vorgesehen werden.

Alternativ oder zusätzlich zu den T-Nuten kann demnach auf wenigstens einer Seitenfläche des Grundkörpers eine Befestigungsvorrichtung geschaffen werden. Die Befestigungsvorrichtung kann dabei als im Beton geschaffene Aussparung, in die Spanneisen eingreifen können, oder einfach als Bohrung gebildet sein, durch die Schrauben geführt werden können.

Gemäß einer weiteren Ausführungsform der Erfindung ist die Befestigungsvorrichtung als Platte mit Bohrungen und Angriffsflächen zum Durchführen und Anlegen von Haltemitteln ausgebildet, die einen Flansch auf einer Seitenfläche des Grundkörpers bildet.

Eine derartige Platte wird üblicherweise auf der Grundseite des Grundkörpers, also auf der Standfläche des Grundkörpers, angeordnet, sodass der Grundkörper über die Grundplatte auf einem Untergrund gesichert werden kann. Da die Grundplatte idealerweise etwas über die Grundfläche des Grundkörpers hinausragt, wird ein Flansch ausgebildet, entlang welchem der Grundkörper auf dem Untergrund gesichert werden kann. Auf dem Flansch sind Schraubendurchführungen wie beispielweise Langlochbohrungen oder einfache Bohrungen sowie Angriffsflächen, auf denen ein Spanneisen angesetzt werden kann, vorgesehen.

Gemäß einer weiteren Ausführungsform der Erfindung ist der Grundkörper innen hohl ausgeführt.

Die hohle Ausführung hat den Vorteil, dass Material und Masse eingespart werden, ohne dabei die statische Belastung zu stark zu reduzieren. Aus statischen Gesichtspunkten wird der Grundkörper vorteilhafter Weise so ausgeführt, dass der innere Hohlraum zylinderförmig ist. Die zylinderförmige Ausführung, bei der auf der Innenseite einzelner Betonformkörper Bögen geschaffen werden, bietet besondere statische Vorteile bei Kräften, die entlang der Flächennormalen von Seitenflächen wirken.

Im Falle einer als Grundplatte ausgebildeten Befestigungsvorrichtung kann diese in ihrer Mitte ebenfalls kreisförmig ausgespart werden.

Gemäß einer weiteren Ausführungsform der Erfindung weist die Vertiefung stumpfwinklige Ausschalungsschrägen auf.

Beim Ausschalen von beispielsweise Betonformteilen erweisen sich Fortsätze oder Einbuchtungen, die zu ihrer Grundfläche einen rechten oder gar spitzen Winkel bilden, als besonders nachteilhaft, weil diese das Ausschalen erschweren. Ein stumpfer Winkel zwischen Einbuchtungen oder Fortsätzen sorgt daher für ein bequemes und einfaches Ausschalen von Betonformteilen aus der Schalform.

Gemäß einer weiteren Ausführungsform der Erfindung ist der Beton des Grundkörpers ein ultrahochfester Beton.

Alternativ kann der Beton des Grundkörpers auch armiert oder faserverstärkt oder ein hochfester Beton oder ein Hochleistungsbeton sein.

Ultrahochfeste Betone werden üblicher Weise nicht armiert, sodass auch die Übertragung von Schwingungen über die Armierungseisen vermieden wird, was abermals zur Reduzierung der auf das zu bearbeitende Werkstück übertragenen Vibrationen dient.

Die Erfindung wird nachfolgend unter Bezugnahme auf die Zeichnung näher erläutert, wobei die erste und zweite Ausführungsform gemäß den Figuren 1 bis 7 nicht unter die Erfindung fallen. Es zeigen:
- Fig. 1: eine erste Ausführungsform der Aufspannvorrichtung in einer perspektivischen Ansicht,
- Fig. 2: die Aufspannvorrichtung aus Fig. 1 in einer geschnittenen Darstellung,
- Fig. 3: eine erste Ausführungsform einer Profilschiene,
- Fig. 4: eine Schalform zu Herstellung einer Aufspannvorrichtung,
- Fig. 5: eine zweite Ausführungsform einer Aufspannvorrichtung in einer perspektivischen geschnittenen Darstellung,
- Fig. 6: eine zweite Ausführungsform einer Profilschiene,
- Fig. 7: eine Schaltafel zur Herstellung einer Aufspannvorrichtung in einer Seitenansicht,
- Fig. 8: eine dritte Ausführungsform der Aufspannvorrichtung in einem ersten Verfahrensschritt,
- Fig. 9: die Aufspannvorrichtung aus Fig. 8 nach Ausführung einer Reihe von Verfahrenschritten,
- Fig. 10: die Aufspannvorrichtung aus Fig. 9 im fertigen Zustand in einer perspektivischen Ansicht,
- Fig. 11: die Aufspannvorrichtung aus Fig. 10 in einer Ansicht von unten.

In den Figuren sind gleiche oder funktional gleich wirkende Elemente mit den gleichen Bezugszeichen versehen.

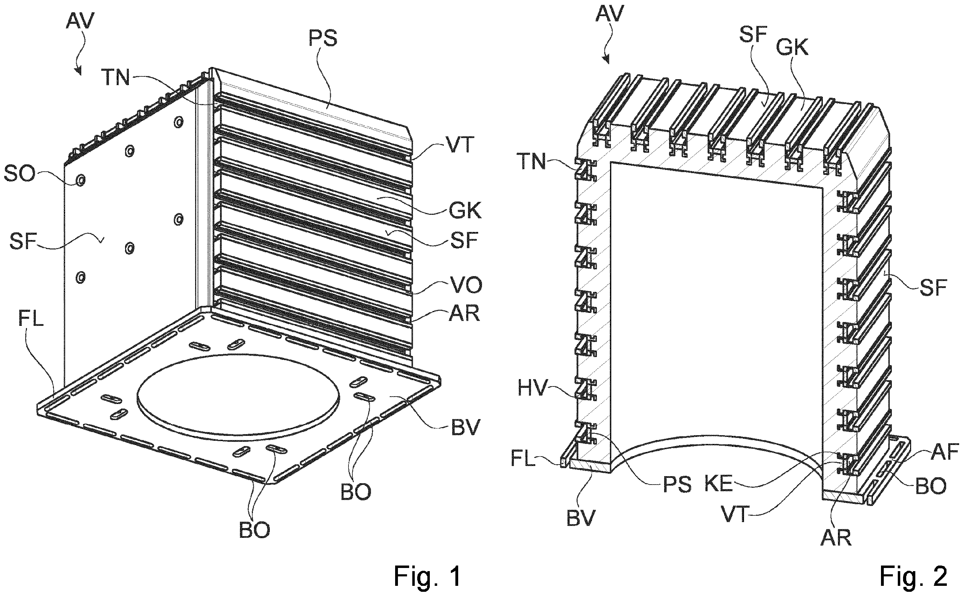

Fig. 1 zeigt eine Aufspannvorrichtung AV zum Fixieren von Werkstücken, die eine Befestigungsvorrichtung BV und einen Grundkörper GK umfasst. Die Befestigungsvorrichtung BV ist als Platte ausgebildet, die über die Fläche des Grundkörpers GK hinausragt, sodass ein Flansch FL gebildet ist. In der Befestigungsvorrichtung BV sind außerdem Bohrungen BO zum Verschrauben der Aufspannvorrichtung AV auf einer Bearbeitungsfläche vorgesehen. Der Grundkörper GK umfasst mehrere Seitenflächen SF, wobei auf manchen Seitenflächen SF Vertiefungen VT ausgebildet sind, in denen Profilschienen PS angeordnet sind, die Vorsprünge VO umfassen. Die Vertiefungen VT sind jeweils in Längsrichtung auf der Seitenfläche SF des Grundkörpers GK angeordnet und berühren dabei die beiden Stirnseiten der jeweiligen Seitenfläche SF. Die Profilschienen PS umfassen Seitenwände und einen Boden, die einen Aufnahmeraum umgeben, der von den Stirnseiten der Seitenfläche SF zugänglich ist. Jeweils zwei Vorsprünge VO einer Profilschiene PS bilden einen Freiraum, der gemeinsam mit dem Aufnahmeraum AR eine T-Nut bildet.

Auf der in Fig. 1 links dargestellten Seitenfläche SF sind keine Vertiefungen VT ausgebildet. Anstelle der Vertiefungen sind auf dieser Seitenfläche SF Schraubendurchführungen SO ausgebildet, mittels denen der Grundkörper, dessen Seitenflächen jeweils einzelne Betonformteile bilden, zusammengebaut werden kann.

In Fig. 2 ist die aus Fig. 1 bekannte Aufspannvorrichtung in einer gedrehten Darstellung gezeigt. Wie in dieser Schnittdarstellung zu erkennen ist, sind drei Seitenflächen SF der Aufspannvorrichtung AV mit Vertiefungen VT versehen. In die Vertiefungen VT wurden Profilschienen PS eingebracht. Die Profilschienen PS weisen auf ihrer dem Aufnahmeraum AR abgewandten Seite Kerben KE auf, welche in den Beton des Grundkörpers GK einbetoniert wurden. Die Profilschienen PS in den Vertiefungen VT sind äquidistant über die Seitenfläche SF angeordnet. Wahlweise können die T-Nuten auf unterschiedlichen Seitenflächen unterschiedliche Maße aufweisen, sodass entsprechend eines zu befestigenden Werkstücks geeignete T-Nuten wählbar sind.

Wie in Fig. 2 dargestellt, wurde die Befestigungsvorrichtung BV, die als Platte ausgeführt ist, auf der Unterseite des Grundkörpers GK festgeklebt. Die Befestigungsvorrichtung BV steht etwas über die Grundfläche des Grundkörpers GK über, sodass ein Flansch FL ausgebildet wird. Auf dem Flansch sind Angriffsflächen AF für Spannpratzen vorgesehen.

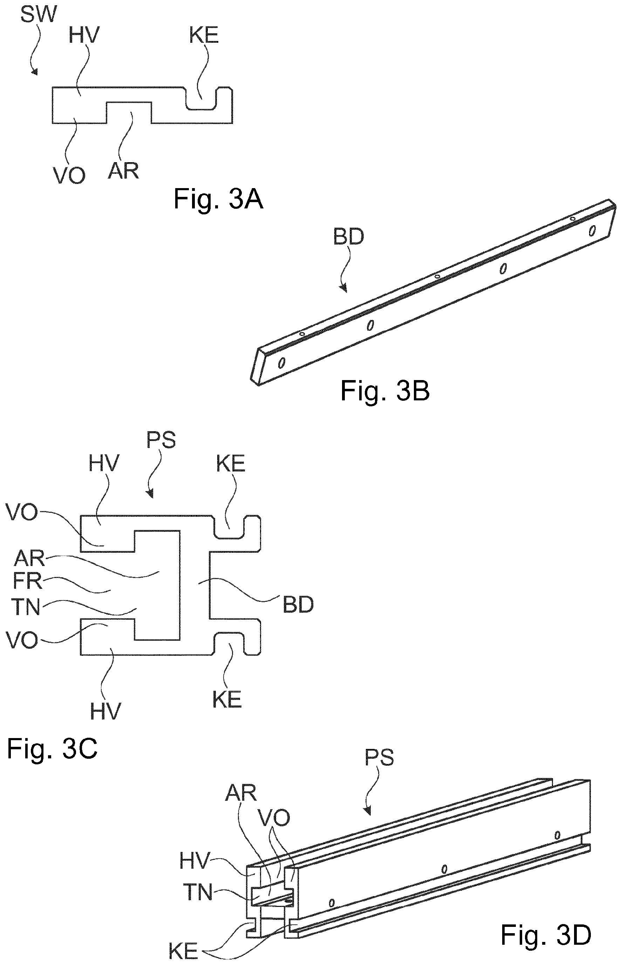

In Fig. 3A bis 3D wird eine Profilschiene PS gezeigt, wie sie in den Fig. 1 und 2 in den Grundkörper GK einbetoniert wurde.

Fig. 3A zeigt dabei eine Seitenwand SW der Profilschiene PS, die an einem Ende eine Kerbe KE zum Einbetonieren und am anderen Ende eine Haltevorrichtung HV aufweist. Die Haltevorrichtung HV umfasst einen Vorsprung VO, der über einen Aufnahmeraum AR ragt.

Fig. 3B zeigt einen Boden BD der Profilschiene PS. Dieser verbindet jeweils zwei Seitenwände stegartig.

In Fig. 3C ist die aus zwei Seitenwänden SW und einem Boden BD zusammengesetzte Profilschiene PS dargestellt. Die Profilschiene PS entsteht aus den zwei Seitenwänden und dem Boden, beispielsweise durch Verschweißen. Die Seitenwände SW und der Boden BD umgeben einen Aufnahmeraum AR, der durch Vorsprünge VO teilweise verschlossen wird. Zwischen den Vorsprüngen VO wird ein Freiraum FR freigelassen, sodass der Freiraum FR und der Aufnahmeraum AR gemeinsam eine T-Nut TN bilden. Der lichte Querschnitt des Freiraums FR ist dabei geringer als der lichte Querschnitt des Aufnahmeraums AR. Die Vorsprünge VO ragen von zwei Seiten aus symmetrisch über den Aufnahmeraum AR.

In Fig. 3D wird die Profilschiene PS aus Fig. 3C in einer perspektivischen Ansicht dargestellt. Wie zu erkennen ist, ragen die Vorsprünge VO quer zur Längsrichtung der Profilschiene PS über den Aufnahmeraum AR.

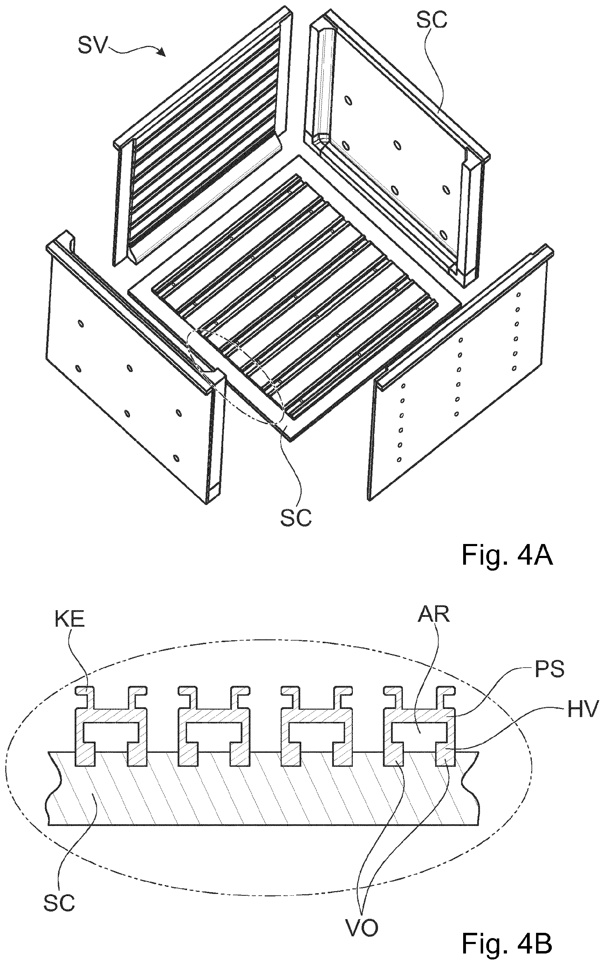

In Fig. 4A wird eine Schalvorrichtung SV zum Herstellen einzelner Betonformteile für einen Grundkörper dargestellt, die mehrere Schaltafeln SC umfasst. Die Schalvorrichtung SV kann entweder zu einem Würfel zusammengesetzt werden und anschließend mit Beton gefüllt werden, um einen einstückigen Grundkörper zu schaffen, oder aber die einzelnen Betonformteile werden in separaten Schalformen SC jeweils einzeln aus Beton gegossen.

Fig. 4B zeigt eine vergrößerte Darstellung einer Schaltafel SC mit Profilschienen PS aus Fig. 4A. Dabei ist in Fig. 4B zu erkennen, dass die Haltevorrichtung HV etwas in die typischerweise aus Holz oder Kunststoff gefertigte Schaltafel SC hineinragt. Demnach würde die Haltevorrichtung HV mit den Vorsprüngen VO etwas aus der fertiggestellten Seitenfläche hinausragen. Die Profilschienen PS können auf der Schaltafel SC mittels nicht dargestellten Klemmen oder Nägeln befestigt werden.

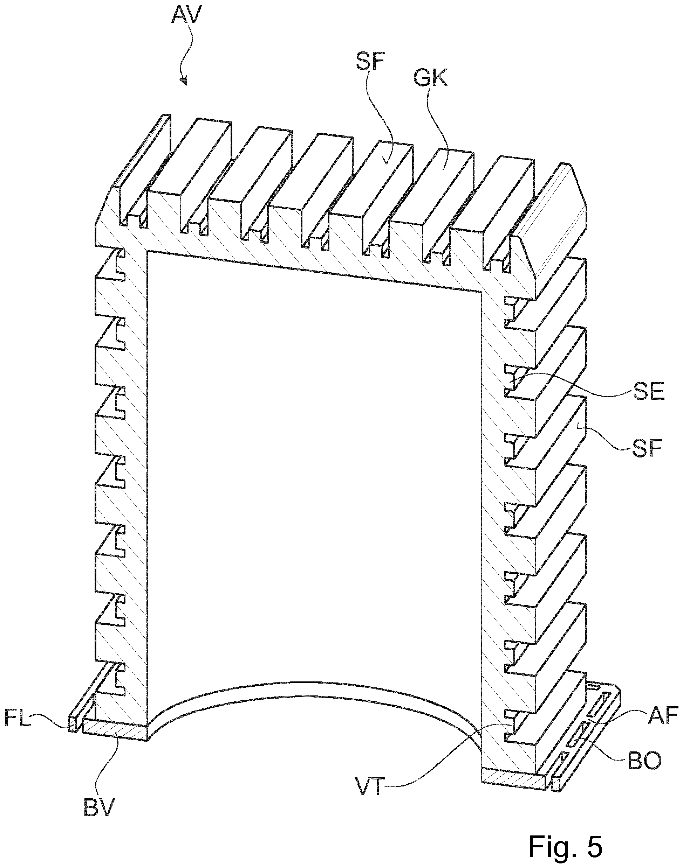

In Fig. 5 wird eine Aufspannvorrichtung AV gezeigt, die auf mehreren Seitenflächen SF Vertiefungen VT umfasst. Im Gegensatz zu Fig. 1 und 2 wurden in die Vertiefungen VT keine Profilschienen PS einbetoniert. Auf der Unterseite des Grundkörpers GK der Aufspannvorrichtung AV ist eine Befestigungsvorrichtung BV angeordnet. Die Vertiefungen VT in Fig. 5 weisen Stufen SE auf, die die Kontaktfläche zwischen einer einzubringenden Profilschiene und dem Grundkörper GK vergrößern.

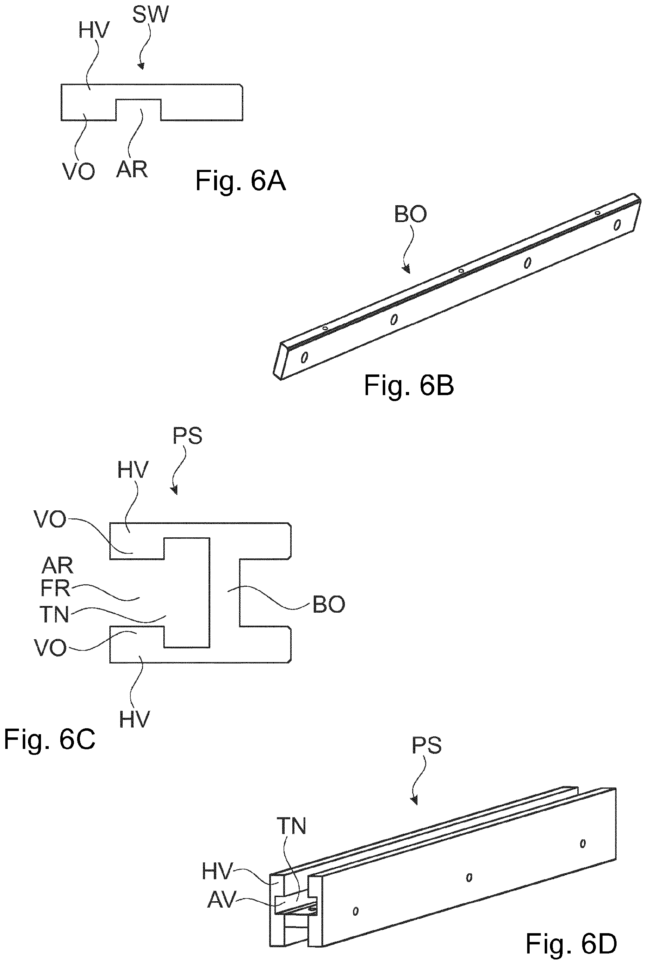

In Fig. 6A bis 6D wird eine Profilschiene zur Verwendung in den Vertiefungen VT aus Fig. 5 dargestellt.

Die Profilschiene umfasst dabei die in Fig. 6A dargestellten Seitenwände SW und einen in Fig. 6B dargestellten Boden BO. Im Gegensatz zu Fig. 3 weist die Profilschiene PS keine Kerbe KE auf. Das in Richtung des Grundkörpers GK weisende Ende der Profilschiene PS weist eine Form auf, die mit dem in der Vertiefung VT aus Fig. 5 gebildeten Stufe SE korrespondiert.

Fig. 6C zeigt die Profilschiene in einer Schnittdarstellung, wobei die mit der Stufe SE aus Figur 5 korrespondierende Form im Bereich des Bodens als Einbuchtung ausgebildet ist. Von der Haltevorrichtung HV, die auf den Seitenwänden SW ausgebildet ist, steht je von ein Vorsprung VO in Richtung des Aufnahmeraumes AR ab, sodass der Aufnahmeraum teilweise verschlossen wird. Der zwischen den Vorsprüngen entstehende Freiraum FR und der Aufnahmeraum bilden eine T-Nut TN.

In Figur 6D ist die Profilschiene aus Figur 6C in einer perspektivischen Ansicht gezeigt. Die Vorsprünge verlaufen parallel zueinander und in Längsrichtung, sodass der in Figur 6C gezeigte Freiraum FR über die gesamte Längsachse der Profilschiene PS hinweg den gleichen Querschnitt aufweist.

Die Profilschiene aus Fig. 6A bis 6D ist zum Einkleben in die Vertiefung vorgesehen.

Die Schalvorrichtung SV aus Fig. 4 kann im Wesentlichen auch zur Herstellung eines Grundkörpers GK, wie in Fig. 5 dargestellt, verwendet werden. Da allerdings der Grundkörper GK aus Fig. 5 dafür vorgesehen ist, dass Profilschienen PS in diesen eingeklebt werden, werden die Profilschienen PS nicht in die Schaltafel SC eingelegt, um einbetoniert zu werden.

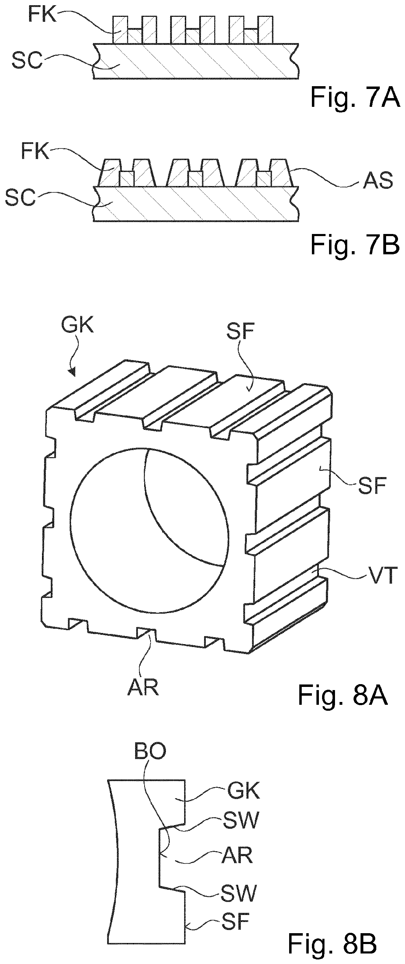

In Fig. 7A und7B wird eine Schaltafel SC mit darauf angeordneten Formkörpern FK dargestellt, mittels denen die Vertiefungen VT aus Fig. 5 hergestellt werden können. Fig. 7B zeigt dabei, dass die Formkörper FK Ausschalschrägen AS aufweisen, die ein Ausschalen des ausgehärteten Grundkörpers aus Beton erleichtern. In Fig. 7A ist diese Anordnung ohne Ausschalschrägen gezeigt.

Fig. 8A und Fig. 8B zeigen einen Grundkörper GK, der innen hohl ausgeführt ist und auf dessen Seitenflächen SF Vertiefungen VT angeordnet sind. Wie in der vergrößerten Darstellung einer geschnittenen Seitenansicht in Fig. 8B gezeigt, umgeben zwei Seitenwände SW und ein Boden BO einen Aufnahmeraum AR. Die Seitenwände SW und der Boden BO sind dabei integraler Bestandteil des Grundkörpers GK und somit aus Beton gefertigt. Die Seitenwände SW weisen Ausschalschrägen auf, stehen also nicht senkrecht zum Boden BO.

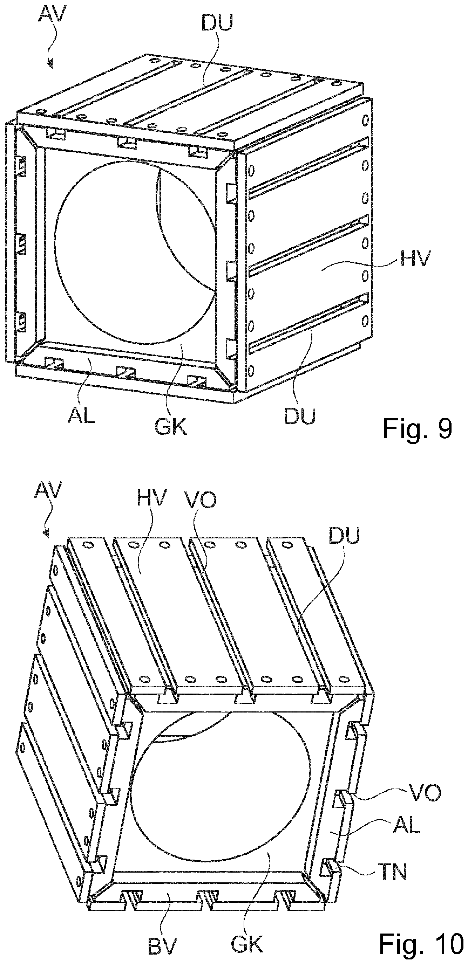

Fig. 9 zeigt den Grundkörper GK aus Fig. 8A bzw. 8B, wobei auf dessen Seitenflächen SF Haltevorrichtungen HV angeordnet wurden, wobei die Haltevorrichtungen HV als Trägerplatte ausgebildet sind. In den Haltevorrichtungen HV sind als Durchbrüche DU ausgebildete Freiräume vorgesehen, wobei die Durchbrüche DU in Längsrichtung verlaufen. Die Durchbrüche DU wurden über den Vertiefungen VT des Grundkörpers GK angeordnet, so dass die Freiräume und der Aufnahmeraum AR der Vertiefung VT einen T-Nutenförmigen Querschnitt aufweisen. Auf der Unterseite des Grundkörpers GK wurden Auflagen AL angeordnet, die mit den Haltevorrichtungen HV verschraubt wurden und auf der Unterseite des Grundkörpers GK festgeklebt wurden.

In Fig. 10 ist die Aufspannvorrichtung AV aus Fig. 9 gezeigt, wobei die Durchbrüche DU stirnseitig durch Materialabtragung geöffnet wurden. Demnach kann von der Stirnseite einer Seitenfläche SF ausgehend, nun ein Haltemittel in die T-Nut TN der Aufspannvorrichtung AV eingebracht werden.

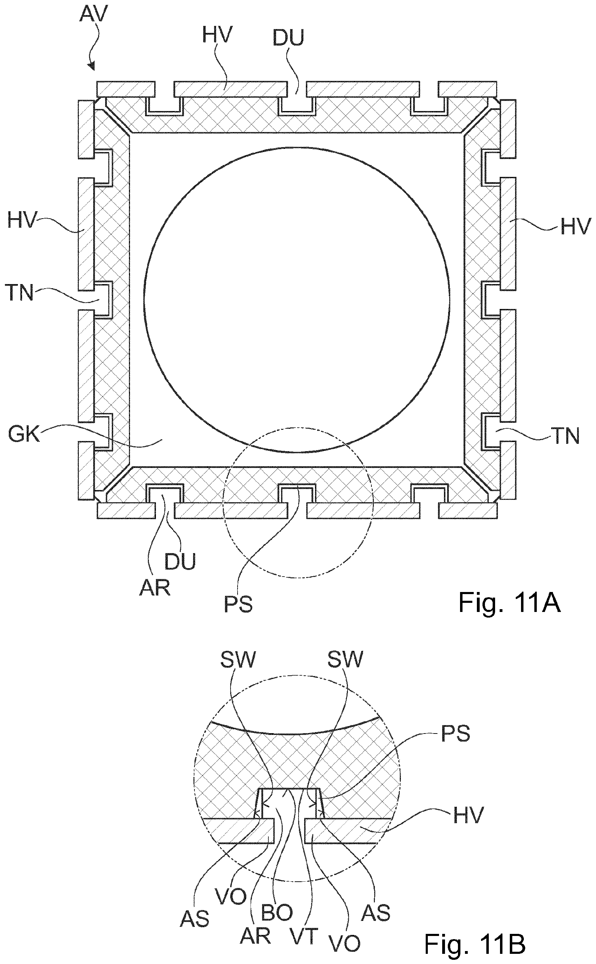

In Fig. 11A ist die fertig hergestellte Aufspannvorrichtung AV aus Fig. 10 in einer Ansicht von unten dargestellt. Die Auflage AL ist auf Höhe der Vertiefungen VT ausgespart, so dass die T-Nut TN von den Stirnseiten her zugänglich ist. Fig. 11B zeigt einen vergrößerten Ausschnitt aus Fig. 11A. In diesem Ausschnitt ist die T-Nut TN zu sehen, wobei in die Vertiefung VT des Grundkörpers GK eine Profilschiene PS mit zwei Seitenwänden SW und einem Boden BO eingebracht wurde. Die Profilschiene PS gleicht Ausschalschrägen AS der Vertiefungen VT des Grundkörpers GK aus, so dass die Seitenwände SW parallel zueinander verlaufen. Vorsprünge VO ragen teilweise über den Aufnahmeraum AR der in der Vertiefung VT durch die Seitenwände SW und dem Boden BO umgeben wird.

## Patentansprüche

1. Aufspannvorrichtung (AV) zum Fixieren von Werkstücken bei einer Bearbeitung, umfassend eine Befestigungsvorrichtung (BV), in die Haltemittel zum Anordnen der Aufspannvorrichtung (AV) auf einer Arbeitsfläche eingreifen können, und einen Grundkörper (GK), wobei der Grundkörper (GK) auf einer Seitenfläche (SF) wenigstens eine Vertiefung (VT) aufweist, die entlang einer Längsrichtung zwischen gegenüberliegenden Stirnseiten der Seitenfläche ausgebildet ist und in der zwei gegenüberliegende Seitenwände und ein Boden einen Aufnahmeraum (AR) umgeben, wobei der Aufnahmeraum (AR) durch zwei zueinander parallel verlaufende und quer zur Längsrichtung über den Aufnahmeraum ragende Vorsprünge (VO) einer Haltevorrichtung (HV) derart verschließbar ist, dass die Vorsprünge einen entlang der Längsrichtung verlaufenden Freiraum (FR) bilden, sodass der Freiraum (FR) und der Aufnahmeraum (AR) eine T-Nut ausbilden, in der ein Werkstück fixiert werden kann, wobei der Grundkörper (GK) aus Beton gefertigt ist,
**dadurch gekennzeichnet, dass**
die Haltevorrichtung (HV) als Trägerplatte ausgebildet ist, in der der Freiraum (FR) als in Längsrichtung verlaufender Durchbruch (DU) ausgespart ist, wobei die Vorsprünge (VO) längs des Durchbruches (DU) ausgebildet sind und der Durchbruch (DU) die Vorsprünge (VO) voneinander beabstandet, wobei die Trägerplatte derart auf der Seitenfläche (SF) angeordnet ist, dass der Freiraum (FR) in Längsrichtung über der Vertiefung (VT) verläuft, wobei der Freiraum (FR) quer zur Längsrichtung schmaler als die Vertiefung (VT) quer zur Längsrichtung ist.

2. Aufspannvorrichtung nach Anspruch 1, bei der der Aufnahmeraum entlang der Seitenwände und des Bodens an den Grundkörper grenzt.

3. Aufspannvorrichtung nach Anspruch 1, bei der der Aufnahmeraum entlang der Seitenwände und des Bodens an eine Profilschiene grenzt, die die Seitenwände und den Boden umfasst und formschlüssig in die Vertiefung eingebracht werden kann.

4. Aufspannvorrichtung nach Anspruch 3, bei der die Profilschiene in der Vertiefung einbetoniert ist.

5. Aufspannvorrichtung nach Anspruch 3, bei der die Profilschiene in der Vertiefung eingeklebt ist.

6. Aufspannvorrichtung nach einem der Ansprüche 3, 4 oder 5, bei der die Profilschiene die Haltevorrichtung umfasst, wobei die Vorsprünge auf den Seitenwänden der Profilschiene ausgebildet sind.

7. Aufspannvorrichtung nach einem der Ansprüche 3 oder 4 bis 6, bei der die Profilschiene auf ihrer dem Aufnahmeraum abgewandten Seite Kerben umfasst.

8. Aufspannvorrichtung nach einem der Ansprüche 1 bis 7, bei der der Grundkörper mindestens ein Betonformteil umfasst.

9. Aufspannvorrichtung nach einem der Ansprüche 1 bis 8, bei der der Grundkörper (GK) quaderförmig ist.

10. Aufspannvorrichtung nach einem der Ansprüche 1 bis 9, bei der die Befestigungsvorrichtung (BV) integral in einer Seitenfläche des Grundkörpers (GK) angeordnet ist.

11. Aufspannvorrichtung nach einem der Ansprüche 1 bis 10, bei der die Befestigungsvorrichtung (BV) als Platte (GP) mit Bohrungen (BO) und Angriffsflächen (AN) zum Durchführen und Anlegen von Haltemitteln ausgebildet ist, die einen Flansch (FL) auf einer Seitenfläche des Grundkörpers (GK) bildet.

12. Aufspannvorrichtung nach einem der Ansprüche 1 bis 11, deren Grundkörper innen hohl ausgeführt ist.

13. Aufspannvorrichtung nach einem der Ansprüche 1 bis 12, bei der die Vertiefung (VT) stumpfwinklige Ausschalungsschrägen (AS) aufweist.

14. Aufspannvorrichtung nach einem der Ansprüche 1 bis 13, bei der der Beton des Grundkörpers ein ultrahochfester Beton ist.

15. Aufspannvorrichtung nach Anspruch 1, wobei der Durchbruch stirnseitig offen ist.

## Claims

1. Clamping device (CD) for fixing workpieces during machining, comprising a fastening device (FD) into which holding means for arranging the clamping device (CD) can engage on a working surface, and a base body (BB), the base body (BB) having at least one depression (DP) on a side surface (SS) which is formed along a longitudinal direction between opposite end faces of the side face and surrounds a receiving space (RS) in the two opposite side walls and a base, wehrein the receiving space (RS) can be closed by two projections (PR) of a holding device (HD) extending in parallel with one another and protruding beyond the receiving space transversely to the longitudinal direction such that the projections form a free space (FS) extending along the longitudinal direction, such that the free space (FS) and the receiving space (RS) form a T-groove in which a workpiece can be fixed, wherein the base body (BB) is made of concrete,
**characterized in that**
the holding device (HD) is designed as a carrier plate in which the free space (FS) is recessed as an opening (OP) extending in the longitudinal direction, wherein the projections (PR) are formed along the opening (OP) and the projections (PR) are spaced apart from one another by the opening (OP), wherein the carrier plate is arranged on the side face (SS) such that the free space (FS) extends in the longitudinal direction above the depression (DP), wherein the free space (FS) is narrower transversely to the longitudinal direction than the depression (DP) transversely to the longitudinal direction.

2. Clamping device according to claim 1, wherein the receiving space is adjacent to the base body along the side walls and the base.

3. Clamping device according to claim 1, wherein the receiving space adjoins a profile rail along the side walls and the base, which profile rail encompasses the side walls and the base and can be introduced into the recess in a form-fitting manner.

4. Clamping device according to claim 3, wherein the profile rail is concreted in the depression.

5. Clamping device according to claim 3, wherein the profile rail is glued in the depression.

6. Clamping device according to any of claims 3, 4 or 5, wherein the profile rail comprises the holding device, wherein the projections are formed on the side walls of the profile rail.

7. Clamping device according to any of claims 3 or 4 to 6, wherein the profile rail comprises notches on its side facing away from the receiving space.

8. Clamping device according to any of claims 1 to 7, wherein the base body comprises at least one concrete molding.

9. Clamping device according to any of claims 1 to 8, wherein the base body (BB) is cuboidal.

10. Clamping device according to any of claims 1 to 9, wherein the fastening device (FD) is arranged integrally in a side face of the base body (BB).

11. Clamping device according to any of claims 1 to 10, wherein the fastening device (FD) is designed as a plate (PL) having bores (BO) and engagement surfaces (ES) for passing through and applying holding means, which forms a flange (FL) on a side face of the base body (BB).

12. Clamping device according to any of claims 1 to 11, wherein the base body is hollow on the inside.

13. Clamping device according to any of claims 1 to 12, wherein the depression (DP) comprises frustoconical framework chamfers (FC).

14. Clamping device according to any of claims 1 to 3, wherein the concrete of the base body is an ultra-high-strength concrete.

15. Clamping device according to claim 1, wherein the opening is open at the end face.

## Revendications

1. Dispositif de fixation (AV) permettant de fixer des pièces lors d'un usinage, comprenant un dispositif de fixation (BV) dans lequel des moyens de retenue peuvent entrer en prise pour disposer le dispositif fixation (AV) sur une surface de travail, et un corps de base (GK), le corps de base (GK) présentant sur une surface latérale (SF) au moins une cavité (VT) qui est formée le long d'une direction longitudinale entre des côtés frontaux opposés de la surface latérale et dans laquelle deux parois latérales opposées et un fond entourent un espace de réception (AR), l'espace de réception (AR) pouvant être fermé par deux saillies (VO) d'un dispositif de retenue (HV), parallèles l'une par rapport à l'autre et dépassant de l'espace de réception transversalement à la direction longitudinale, de telle sorte que lesdites saillies forment un espace libre (FR) s'étendant le long de la direction longitudinale, de sorte que ledit espace libre (FR) et ledit espace de réception (AR) forment une rainure en T dans laquelle une pièce peut se fixer, le corps de base (GK) étant réalisé en béton,
**caractérisé en ce que**
le dispositif de retenue (HV) est réalisé sous la forme d'une plaque de support dans laquelle l'espace libre (FR) est évidé sous la forme d'un passage (DU) s'étendant dans la direction longitudinale, les saillies (VO) étant réalisées le long du passage (DU) et le passage (DU) espaçant les saillies (VO) les unes des autres, la plaque de support étant disposée sur la surface latérale (SF) de telle sorte que l'espace libre (FR) s'étende dans la direction longitudinale au-dessus de la cavité (VT), l'espace libre (FR) étant plus étroit transversalement à la direction longitudinale que la cavité (VT) transversalement à la direction longitudinale.

2. Dispositif de fixation selon la revendication 1, dans lequel l'espace de réception est adjacent au corps de base le long des parois latérales et du fond.

3. Dispositif de fixation selon la revendication 1, dans lequel l'espace de réception est adjacent, le long des parois latérales et du fond, à un rail profilé qui entoure les parois latérales et le fond et qui peut être inséré par complémentarité de forme dans le renfoncement.

4. Dispositif de fixation selon la revendication 3, dans lequel le rail profilé est bétonné dans la cavité.

5. Dispositif fixation selon la revendication 3, dans lequel le rail profilé est collé dans la cavité.

6. Dispositif fixation selon l'une des revendications 3, 4 ou 5, dans lequel le rail profilé comprend le dispositif de retenue, les saillies étant formées sur les parois latérales du rail profilé.

7. Dispositif de fixation selon l'une des revendications 3 ou 4 à 6, dans lequel le rail profilé comprend des encoches sur sa face opposée à l'espace de réception.

8. Dispositif fixation selon l'une des revendications 1 à 7, dans lequel le corps de base comprend au moins une pièce moulée en béton.

9. Dispositif fixation selon l'une des revendications 1 à 8, dans lequel le corps de base (GK) est en forme de parallélépipède.

10. Dispositif fixation selon l'une des revendications 1 à 9, dans lequel le dispositif de fixation (BV) est disposé intégralement dans une surface latérale du corps de base (GK).

11. Dispositif de fixation selon l'une des revendications 1 à 10, dans lequel le dispositif de fixation (BV) est réalisé sous la forme d'une plaque (GP) comportant des trous (BO) et des surfaces d'attaque (AN) pour le passage et l'application de moyens de retenue, laquelle plaque forme une bride (FL) sur une surface latérale du corps de base (GK).

12. Dispositif de fixation selon l'une des revendications 1 à 11, dont le corps de base est réalisé de manière creuse à l'intérieur.

13. Dispositif fixation selon l'une des revendications 1 à 12, dans lequel la cavité (VT) présente des pentes de décoffrage (AS) à angle obtus.

14. Dispositif fixation selon l'une des revendications 1 à 13, dans lequel le béton du corps de base est un béton à ultra haute résistance.

15. Dispositif fixation selon la revendication 1, dans lequel le passage est ouvert sur la face frontale.
